# EUROPÄISCHE PATENTANMELDUNG

(11) **EP 2 256 093 A1**
(43) Veröffentlichungstag der Anmeldung: **01.12.2010**
(21) Anmeldenummer: 10004825.5
(22) Anmeldetag: 06.05.2010
(51) Int. Cl.: C02F 3/12

(54) **Kleinkläranlage mit Ringfilter**

(30) Priorität: 07.05.2009 DE 102009020202
(71) Anmelder: Engelhardt, Karl, 91555 Feuchtwangen (DE)
(72) Erfinder: Engelhardt, Karl, 91555 Feuchtwangen (DE)

(57) **Zusammenfassung**

Kleinkläranlage mit natürlicher Abwasserbelüftung, als Einschacht-System mit umlaufendem Ringfilter, aus Fertigteilen mit mineralischen Füllstoffen. Die Ringfilteranlage ermöglicht biologischen Kohlenstoffabbau (Reinigungsklasse C) und Stickstoffoxidation (Reinigungsklasse N), bereits ab ca. 1 m Gefälle zur Kanalisation, in einer einzigen Aushubgrube und ganz ohne elektrisch betriebene, aktive Belebungstechik. Nachrüstung für die Reinigungsklassen "D" (Denitrifikation), "+P" (Phosphatausfällung) und "+H" (Hygienisierung), ist optional im integrierten Probenahmeschacht möglich.

## Beschreibung

Die Erfindung betrifft eine Kleinkläranlage mit Abwasserbelüftung nach dem Oberbegriff des Anspruches 1.

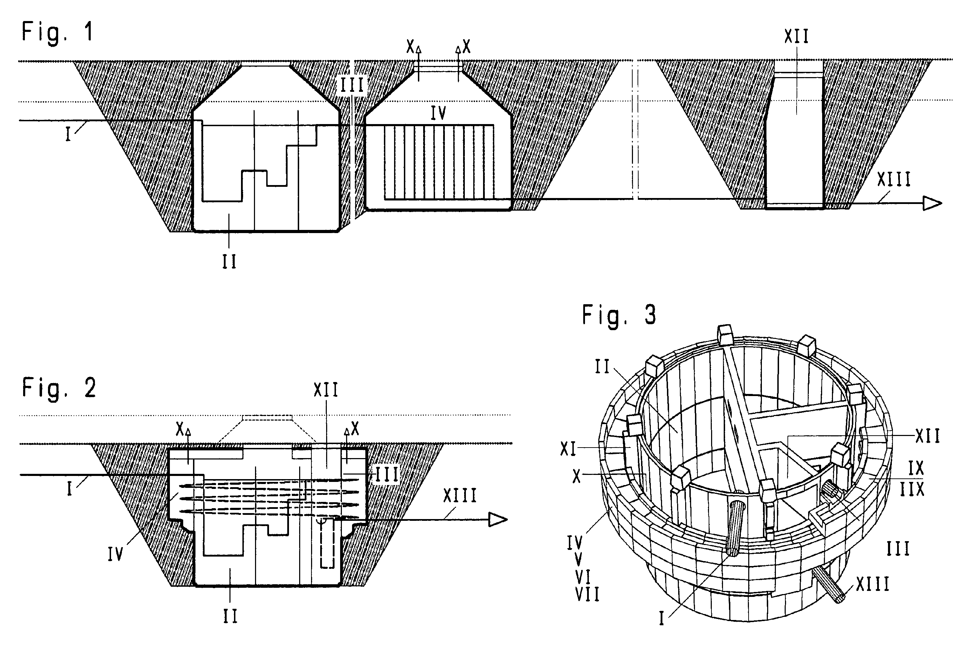

Die bisher bekannten Kleinkläranlagen gemäß DIN EN 12566-3 bzw. DIN 4261-2 haben alle den Nachteil, dass sie entweder sehr aufwändige Technik oder viel Einbauplatz brauchen. Zur Abwasserbelüftung sind entweder wartungsintensive, biologische Belebungsbecken mit elektronisch geregelten Pumpen und/oder Kompressoren, sowie hydropneumatischen Schlauch- oder Rohrkomponenten mit Zusatzapparaturen erforderlich oder die Anlage muss als voluminöses Mehrbehältersystem (Fig.1) mit separaten Tauch-, Tropf- oder Bodenkörpem, sowie hydraulischen oder mechanischen Wasserverteilungsvorrichtungen ausgestattet werden, um die geforderten Grenzwerte für Kohlenstoffabbau und Nitrifikation, zu erreichen.

Der Erfindung liegt die Aufgabe zu Grunde, eine Kleinkläranlage in einem einzigen, platzsparenden Aushubschacht zu ermöglichen und dabei, trotz der erheblichen Reduzierung des Einbauvolumens, den aeroben Nachklärvorgang auf einfachste Weise und auf rein natürlichem Wege zu bewerkstelligen. Diese Aufgabe wird gemäß den Ansprüchen 1 bis 12 gelöst.

Die Ringfilter-Kleinkläranlage (Fig.2) ermöglicht die Abwasserklärung entsprechend den "Zulassungsgrundsätzen für allgemein bauaufsichtliche Zulassung für die Anwendung von Kleinkläranlagen durch das Deutsche Institut für Bautechnik", in den Ablaufklassen bzw. Reinigungsklassen "C" und "N". Systembedingt werden dabei keine elektrischen oder elektromechanischen Zusatzgeräte wie Pumpen, Verdichter, Magnetventile usw. benötigt. Je nach Anschlussgröße kann bereits ab einer Höhendifferenz von 1,0 m zwischen Einlauf (I) und Auslauf (XIII) eine Anlage eingebaut und ohne Fremdenergie betrieben werden.

Die Anlage ist sowohl für den Komplettneubau als auch für die Nachrüstung von Rundschächten mit 3-Kammer-Ausfaulgruben (II) oder anderen Klärsystemen wie z.B. SBR-Reaktoren (Sequenzielle Biologische Reinigung bzw. Sequential Batch Reactor) geeignet. Bei Kombination mit nicht tragfähigen Vorklärbehältern muss das Ringfiltersystem an eigens gegründeten statisch gegen Erddruck stabilisierten Trägem befestigt werden.

Im Regelfall wird der belüftete Nachklärfilter (IV) ringförmig um eine herkömmliche Vorklärgrube aus wasserdichten und gegen Auftrieb und Erddruck stabilisierten Betonfertigteilschachtringen angebracht. Dabei dienen von oben angehängte Fertigteilhalter (XI), vorzugsweise aus Stahlbeton, sowohl als Montagehilfe als auch als Abstandshalter für die umlaufende Belüftungshülle (X) zwischen Vorklärschacht und Ringfilter. In die Aussparungen der Fertigteilhalter (XI) werden dann Rinnensegmente (V) aus vorgefertigten Betonteilen eingeschoben und zu Ringen zusammengesetzt, die vorklärschachtseitig eine niedere und seitlich offene Rinnenwand aufweisen und außenseitig eine höhere Rinnenwand haben, die nach dem Aufeinandersetzen der Rinnenelemente eine geschlossene Außenwand bilden. Der Rinnenboden ist am Filtereinlauf zur Wasserverteilung zunächst noch geschlossen und geht dem Wasserlauf folgend in zunehmend porösen oder lochperforierten, schwach durchlässigen Beton über, so dass nur geringe Mengen Wasser schwach durchsickern und auf die darunter liegende Rinnenwindung tropfen können, größere Wassermengen aber in den Schwerkraftfluss des abgestuften Rinnengefälles gezwungen werden. Auf dem Rinnenboden mit grobkörniger Oberfläche ist zunächst eine dünne Schicht Grobkombeton Körnung 8/16 mm aufbetoniert. Auf der Festfilterschicht (IIX) ist dann noch eine lose Filterschicht (IX) aus Splitt mit der Körnung 4/8 aufgetragen. Die Porenoberflächen dieser mineralischen Filterschichten dienen der Ansiedelung der Darmbakterien und Mikroorganismen zum aeroben Abbau von Kohlenstoffen und der Oxidation des im Abwasser enthaltenen Stickstoffes. Dabei setzen sich im oberen Einlaufbereich des Ringfilters die Poren am Rinnengrund mehr zu als weiter unten zum Auslauf hin und bilden einen Feuchtigkeits- und Belebungsspeicher bei längeren Perioden ohne Wassernachlauf.

Die Filterringelemente (IV) verlaufen spiralringförmig mit treppenförmigen Abstufungen im Gefälle von oben nach unten. Die waagerechten Rinnenbodenstufen sind um ca. 7 mm absinkend höhenversetzt, damit immer eine milimeterdünne Schicht stehendes Wasser in den unteren Filterschichten verbleibt und der Gefällefluss verzögert wird. Die serpentinenenartigen Filterwindungen sind dabei an den Außenwandungen der Rinnenkörper aufeinander gesetzt und mit Verzahnung und/oder Mörtelbett verbunden. Die Innenwandungen liegen in den Aussparungen der Abstandshalter (XI) auf und an. Durch den Erddruck werden die Filterringwindungen gegen den Vorklärschacht gedrückt. Im oberen Bereich des Auslaufes (III) aus der Vorklärung ist ein Übergangsstück in die erste Filterwindung angeformt, diese wird von einer tragend belastbaren Betondecke überdeckt und außenseitig mit Ausgleichskeilwandstücken geschlossen. Im Unteren Bereich des Auslaufes aus dem Ringfilter dient ebenfals ein Übergangsstück zur Einleitung des nachgeklärten Wassers in den Probeentnahme- und Revisionsschacht (XII).
Dieser kann sowohl im direkten Anschluß außerhalb angebaut werden, als auch vorzugsweise in Form einer innerhalb der 3. Vorklärkammer abgeteilten und entleerten 4. Revisionskammer ausgebildet sein. Dabei ist die untere Wasseraustrittsöffnung gleichzeitig auch Revisionsöffnung und Zuluftöffnung. Die Ablüftung erfolgt nach oben über Lüftungsöffnungen in der Schachtdecke. Eine weitere größere Revisionsöffnung ist zur leichteren Reinigung jeweils in Höhe der oberen Filterwindungen ausgespart.

Die Reinigungsleistung und Anlagengröße kann über die Aneinanderreihung von Filterringelementen skaliert werden. Hierzu können Abstufungen in Schrittweite der Vorfertigungsgrößen vorgenommen werden. Diese sind als Großteile in Viertel- (V) oder Halbkreissegmenten für die Versetzung mittels Kran vorgesehen, können aber auch kleinteiliger für die 2-Mann-Verlegung (VI) oder für den 1-Mann Vormauerbau (VII) gefertigt werden. Für die Vormauerverlegung ohne tragende Halter ist eine setzungsfrei verdichtete Baugrubenverfüllung und ein umlaufendes Ortbetonfundament erforderlich.

Alternativ zu der spiralringförmigen Form der Gefällerinne können die Filterringe auch eben, ohne Gefälle in ganzen Kreisringen vorgefertigt werden. In diesem Falle übernimmt der oberste Ring Verteilerfunktion und hat ab dem Filtereinlauf eine entsprechend abgestufte Durchlässigkeit. Die unteren Ringe sind bezüglich ihrerer Filteroberfläche und Durchlässigkeit so ausgelegt, dass die Verteilung in den Poren möglichst gleichmäßig und die Verweildauer des Klärwassers beim Ablaufen und Durchsickern durch die Ringebenen möglichst lange ist. Jede Ringebene ist von der Revisionsöffnung im Probeentnahmeschacht zugänglich.

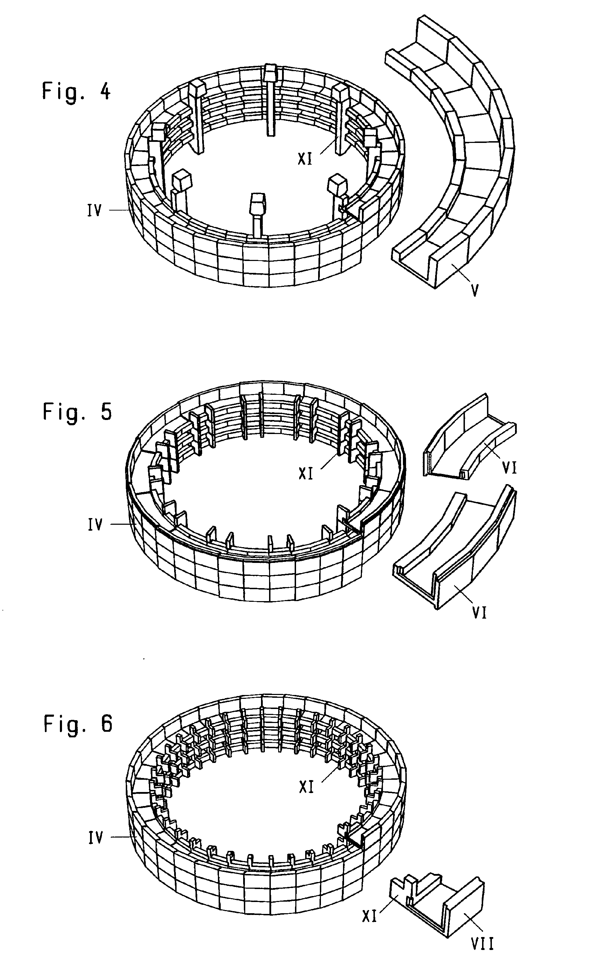

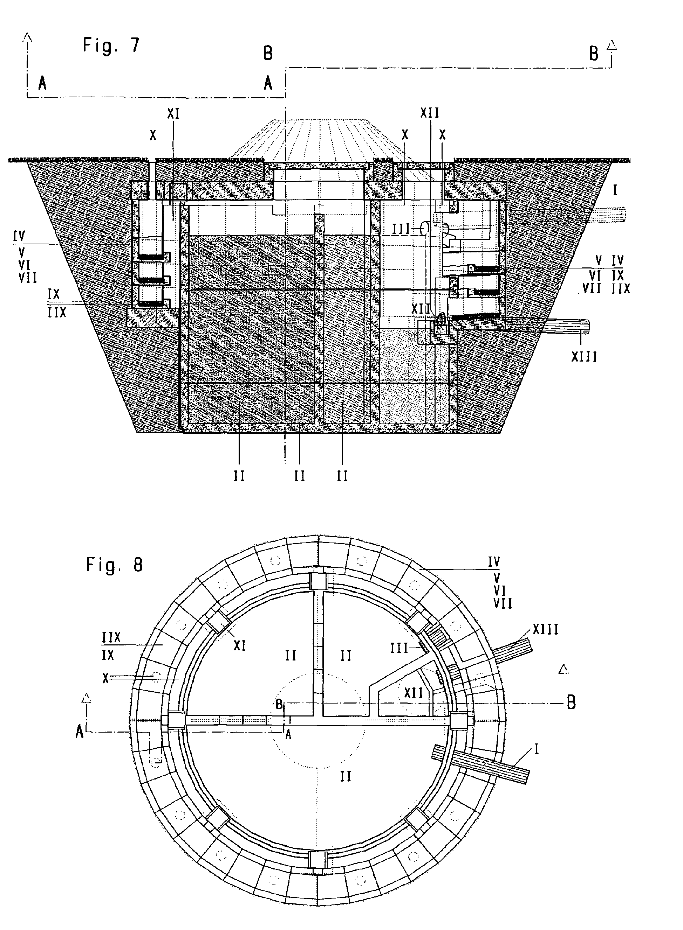

Die Ringfilter-Kleinkläranlage besteht im Wesentlichen aus folgenden Komponenten:
- Bereits im Bestand des Einbauortes vorhandene oder neu einzubauende, runde 3-Kammer-Ausfaulgrube (II) für die anaerobe Vorklärung.
- Trägerelemente (XI) und zugleich Abstandshalter für die Hinterlüftung (X), vorzugsweise aus bewehrten Betonfertigteilen oder korrosionsgeschützten Stahlhaltern
- Speziell geformte Rinnenelemente (IV), übereinander stapelbar und zugleich Außenwand bildend, vorzugsweise als Betonfertigteile (Fig.4-V, Fig.5-VI und Fig.6-VII) vorgefertigt.
- Mehrlagige Filterschicht im Lauf der Rinne aufgetragen, bestehend aus in der Körnungsgröße abgestuften Grob- bzw. Einkornbetonschichten (Fig.7-IIX) und losen Splitt- und/oder Grobsandschichten (Fig.7-IX).
- Ergänzendes Zubehör für die Nachrüstung zur Erfüllung höherer Reinigungsklassen mit erweiterten Anforderungen wie Denitrifikation, Hygienisierung usw. als Einschübe in den Probeentnahmeschacht z.B. in Form von Dosiereinrichtungen für die Phosphatausfällung, mehrschaligen Glaskartuschen mit UV-Lichtröhren oder Filter-Membransäcken sind optional.

Die Anlagezeichnungen zeigen die Variationsmöglichkeiten der Hauptbestandteile im Aufbau der Gesamtanlage.
Dabei bezeichnet:
I > den Schmutzwasser-Einlauf in die Vorklärung
II > den (evtl. vorhandenen) 3-Kammer-Ausfaulschacht
III > den Auslauf aus der Vorklärung
IV > den aeroben Belebungsfilter
V > ein Fertigteil-Ringfilterelement im Viertelkreis-Großformat
VI > ein Fertigteil-Ringfilterelement im 2-Mann-verlegbaren Mittelformat
VII > ein Fertigteil-Ringfilterelement im Einzelsteinformat
IIX > die Einkombeton-Filterschicht
IX > die Splitt-Filterschicht
X > den Zugluftweg (über Kanal und obere Lüftungsöffnungen)
XII > den Probeentnahmeschacht
XI > ein Abstandshalter-Formteil (separat oder angeformt)
XIII > den Klarwasser-Auslauf aus der Kläranlage

Die wesentlichen Vorteile im Vergleich zu einer Bodenkörperfilteranlage sind:
+ Einschacht-System
   Es ist nur noch eine Baugrube notwendig, die auch nicht wesentlich größer ausfällt als die für den ersten Schacht sowieso erforderliche, da der Filterkörper nur im oberen, weiteren Bereich des Arbeitsraumes der Grube eingebaut wird.
+ Keine Mechanik, keine Pneumatik, keine Elektronik
   Abgesehen von einer optionalen Drosselvorrichtung (mit Schwimmerkörper zur Pufferung in der Vorklärung), hat die Anlage keine weiteren mechanischen oder elektrischen Verschleißteile. Keine Wasserwippe, keine Druckluftschläuche, keine Magnetventile, keine separate Regelung oder Steuerelektronik. Der gesamte Wasserlauf erfolgt im natürlichen Gefälle.
+ Reversibel und reinigbar
   Im Gegensatz zu den Filtertassen des Bodenkörperfilters, kann der Ringfilter gespült, mittels Seilbürste oder Hochdruckreiniger mit Laufkatze mechanisch grobgereinigt und nachträglich mit losem Splitt oder Grobsand nachbefüllt werden, ohne dass dazu der Schachtkonus bzw. die Schachtdecke abgenommen werden muss. Dies wird aber im Normalbetrieb über Jahre hinweg nicht erforderlich sein.
+ Kompaktere Fracht möglich
   Die Betonfertigteile sind so kompakt, dass sie platzsparend zusammengeschlichtet und teilweise auch in den 3-Kammer-Schachtringen transportiert werden können. Auch ist die Kombination mit leichteren Volumenfrachtgütern denkbar, um Kapazitäten auszulasten.
+ Auslegung zur Nachrüstung möglich
   Da das System auf die Vorklärung im herkömmlichen 3-Kammer-Schacht ausgelegt ist, lassen sich praktisch alle Rundschächte damit Kombinieren. Auch SBR-Behälter lassen sich mit geringfügigen Modifikationen und halbtiefer Aufgrabung umrüsten, wenn die Betreiber die umständliche Anlagentechnik und Wartung leid sind oder Ärger mit der Zuverlässigkeit haben. Bei entsprechender Resttiefe des Probenahmeschachtes, kann dort ggf. eine entnehmbare UV-Kartusche oder ein Membransack untergebracht werden. Somit ist auch zusätzliche Denitrifikation, Phosphatausfällung und/oder Hygienisierung bei entsprechendem Anlagenaufwand denkbar.
+ Überwiegend robuste "Low-Tech", weil fast ausschließlich Betonbau
   Da die Grundausstattung für die häufigsten Reinigungsklassen "C" und "N", praktisch nur mit bewehrtem Beton und Steinmaterial hergestellt wird, ist die Anlage auch entsprechend robust und unkompliziert zu betreiben. Lediglich die Anforderungen an Statik, Erddruck, Montagefreundlichkeit und Dichtheit müssen in ausreichendem Maße bei der Fertigteilformung berücksichtigt werden.
+ Einfacher und flexibler Einbau
   Das Filtersystem ist bezüglich seiner Reinigungsleistung skalierbar, das heißt, der Filterkörper ist in kleinen Abstufungen vergrößer- bzw. verkleinerbar. Hierzu muss nicht zwangsläufig bis zur Gründungssohle gebaut werden. Auch gibt es drei grundsätzlich mögliche Montageverfahren, die je nach Einbausituation, in Abhängigkeit von den Lohnkosten mehr oder weniger sinnvoll sein können. Sowohl die Schnellmontage von Großteilen mit Kran, als auch die handwerklich aufwändigere 2-Mann-Montage, sowie die 1-Mann-Montage für Extremverhältnisse ohne Möglichkeit des Einsatzes von Kran und Hebewerkzeug ist prinzipiell möglich. Somit kann das System auch für die Eigenleistung, bis hin zum Vertrieb über den Baustoffhandel oder die Baumärkte ausgelegt werden.

### Vorschriftsliteratur hierzu :

Ablaufklassen bzw. Reinigungsklassen "C", "IV", "D", "+P" und "+H", Zulassungsgrundsätze für allgemein bauaufsichtliche Zulassung für die Anwendung von Kleinkläranlagen durch das Deutsche Institut für Bautechnik
- DIN 4045: Begriffe Abwassertechnik
- DIN EN 12566: Kleinkläranlagen für bis zu 50 EW
- Teil 3: Vorgefertigte und/oder vor Ort montierte Anlagen zur Behandlung von häuslichem Schmutzwasser
- DIN 4261 Teil 2: Kleinkläranlagen mit Abwasserbelüftung
- DIN 19 557 Teil 1: Kläranlagen, Mineralische Füllstoffe
- DIN 38 404: Deutsche Einheitsverfahren zur Abwasseruntersuchung
- Teil 4: Physikalisch-Chemische Kenngrößen, Temperaturbestimmung
- Teil 5: Physikalisch-Chemische Kenngrößen, pH-Wert-Bestimmung
- DIN 38 409: Deutsche Einheitsverfahren zur Abwasseruntersuchung
- Teil 2: Summarische Stoffkenngrößen, Bestimmung der abfiltrierbaren Stoffe und ihrer Glührückstände
- Teil 2: Summarische Stoffkenngrößen, Bestimmung des chemischen Sauerstoffbedarfes (CSB)
- DEV H5,: Deutsche Einheitsverfahren zur Abwasseruntersuchung Bestimmung des biochemischen Sauerstoffbedarfes (BSB)
- DEV H22: Deutsche Einheitsverfahren zur Abwasseruntersuchung Prüfung auf Fäulnisfähigkeit

## Patentansprüche

1. Kleinkläranlage mit Abwasserbelüftung durch Zugluft über Lüftungsöffnungen und mittels porösem Filterkörper aus mineralischen Füllstoffen,
**dadurch gekennzeichnet, dass** der Filterkörper mit Lüftungsabstand ringförmig um den Vorklärschacht angebracht ist und das Klärwasser unmittelbar nach Austritt aus der anaeroben Ausfaulgrube, ohne Zwischenleitung, in den aeroben Nachklärfilter eingeleitet wird, von wo es nach Filterdurchlauf wieder in eine wasserdicht separierte Probeentnahmekammer in den Vorklärschacht zurückgeführt wird, um von dort aus geklärt in die Abwasserkanalisation zu laufen.

2. Kleinkläranlage nach Patentanspruch 1, **dadurch gekennzeichnet, dass** der Filterkörper aus rinnenförmigen Stahlbeton-Elementen gebildet wird, die sich spiralförmig nach unten winden.

3. Kleinkläranlage nach Patentanspruch 1, **dadurch gekennzeichnet, dass** der Rinnenboden, wendeltreppenförmig, in schwach abfallende, flach abgestufte Flächen unterteilt ist, die den Wasserlauf verlangsamen.

4. Kleinkläranlage nach Patentanspruch 1, **dadurch gekennzeichnet, dass** der Rinnenboden der Rinnenelemente mit einer ca. 2 cm dicken, nach oben offenporigen Schicht aus Einkornbeton der Korngröße 8 bis 16 mm, im Verbund beschichtet ist.

5. Kleinkläranlage nach Patentanspruch 1, **dadurch gekennzeichnet, dass** auf der festen Einkombetonschicht im Rinnenboden, eine ca. 3 cm dicke, lose Schicht aus Splitt der Korngröße 4 bis 8 mm aufgetragen ist.

6. Kleinkläranlage nach Patentanspruch 1, **dadurch gekennzeichnet, dass** die Rinnenelemente mit tragfähigen Abstandshaltern verlegt werden, die oben am Rand des Vorklärschachtes eingehängt werden und die mit, dem Gefälle folgenden, von Halter zu Halter reihum absinkenden, Aussparungen versehen sind, in die die Rinnenelemente eingeschoben werden.

7. Kleinkläranlage nach Patentanspruch 1, **dadurch gekennzeichnet, dass** die Rinnenelemente als Viertelkreissegmente vorgefertigt werden, bei denen die äußere Rinnenwand so hoch ist, dass sie sich nach einer Gefällewindung schließt, und damit das jeweils obere Rinnenelement auf dem unteren aufliegt. Die innere Rinnenwand ist niederer, so dass die Rinne nach innen, zum Lüftungsabstand hin offen ist und die Luft auch quer zur Rinnenlaufrichtung zirkulieren kann.

8. Kleinkläranlage nach Patentanspruch 1, **dadurch gekennzeichnet, dass** der Filterkörper aus rinnenförmigen Stahlbeton-Elementen gebildet wird, die sich spiralförmig nach unten winden, bei denen eine Windung aus 12 Stück 30-Grad-Segmenten zusammengesetzt wird, die jeweils ein Einzelgewicht von ca. 70 kg haben. Die Rinnenelemente sind an den Fügekanten mit Nut und Feder versehen und werden mit vorgefertigten Abstandsklötzen aus Beton im Klebebett aus Zementmörtel verlegt, so dass ein gleich bleibender horizontal umlaufender Abstand zum Vorklärschacht und eine tragfähige innere vertikale Auflage der Rinnenelemente sicher gestellt wird.

9. Kleinkläranlage nach Patentanspruch 1, **dadurch gekennzeichnet, dass** der Filterkörper aus rinnenförmigen Beton-Elementen gebildet wird, die sich spiralförmig nach unten winden, bei denen eine Windung aus 36 Stück 10-Grad-Segmenten zusammengesetzt wird, die jeweils ein Einzelgewicht von ca. 25 kg haben und wie Mauersteine verlegt werden. Die Rinnenelemente sind an den Fügekanten mit Nut und Feder versehen und haben angeformte Abstandsklötze aus Beton, die sowohl den Abstand zum Vorklärschacht als auch das innere vertikale Auflager übereinander bilden.

10. Kleinkläranlage nach Patentanspruch 1, **dadurch gekennzeichnet, dass** der Filterkörper aus rinnenförmigen Beton-Elementen gebildet wird, die sich spiralförmig nach unten winden und im Rinnenboden eine feine Lochperforation aufweisen. Die Lochzahl der Perforation nimmt mit dem Verlauf des Gefälles zu, so dass mit der Flußweite des Klärwassers auch die Sickerfähigkeit durch die Rinnen bis zur unteren Sammelwindung zunimmt.

11. Kleinkläranlage nach Patentanspruch 1, **dadurch gekennzeichnet, dass** der Filterkörper aus rinnenförmigen Beton-Elementen gebildet wird, die sich spiralförmig nach unten winden und dort in eine separat abgeteilte, vierte Kammer innerhalb der Dreikammer-Ausfaulgrube münden wo ein Wasserbecken zur Probeentnahme, mit Überlauf in das Ableitungsrohr im Schacht angeformt ist.

12. . Kleinkläranlage nach Patentanspruch 1, **dadurch gekennzeichnet, dass** der obere Teil des Filterkörpers aus übereinander gestapelten, flachen Stahlbeton-Ring-Elementen ohne Gefälle gebildet wird, die als Ganzkreisrinnen vorgefertigt werden. Die Rinnenböden sind in sektionale Felder aus Einkornbeton der Korngröße 8 bis 16 mm und im regelmäßigen Wechsel durch druckfeste, flächenbündige Stützriegel aus Stahlbeton unterteilt. Im Bereich des Klärwassereinlaufes ist der Filterboden des obersten Ringes von unten mit Zementmörtel zunächst dicht dann abnehmend dicht zugeschlämmt, so dass eine Wasserverteilung durch zunehmende Sickerdurchlässigkeit gegeben ist. Die äußere Rinnenwand ist höher als die innere, so dass beim Übereinanderstapeln eine geschlossene Außenwand entsteht, nach innen aber eine umlaufende Luftöffnung mit Abstand zum Vorklärschacht gegeben ist. Die unteren Sammelrinnen sind mit Gefälle hin zum Auslauf in den Probeentnahmeschacht.
